# EUROPÄISCHE PATENTANMELDUNG

(11) **EP 1 142 771 A1**
(43) Veröffentlichungstag der Anmeldung: **10.10.2001**
(21) Anmeldenummer: 00107276.8
(22) Anmeldetag: 04.04.2000
(51) Int. Cl.: B62D 1/04, B60R 11/02

(54) **An einem Bauteil zu befestigendes Bedienteil**

(71) Anmelder: Mannesmann VDO Aktiengesellschaft, 60388 Frankfurt am Main (DE)
(72) Erfinder: Verbeek, Peter, 78860 St. Nom la Bretèche (FR); Melou, Stéphane, 78120 Rambouillet (FR); Aubert, Bruno, 28230 Epernon (FR)
(74) Vertreter: Klein, Thomas, Dipl.-Ing. (FH)

(57) **Zusammenfassung**

Ein Bedienteil (1) ist zum Befestigen an einem im Querschnitt kreisförmigen Bauteil, beispielsweise einem Lenkradkranz oder einer Lenkradspeiche ausgebildet. Hierzu sind an dem Bedienteil (1) zum Umschlingen des Bauteiles zwei miteinander zu verbindende Gurtteile (6, 9) angebracht. Ein Gurtteil (6) ist mit einem Spannhebel (3) zum Verschwenken in eine Übertotpunktstellung versehen, in der die Gurtteile (6, 9) sich in einer Spannstellung befinden.

## Beschreibung

Die Erfindung betrifft ein an einem im Querschnitt zumindest in etwa kreisförmigen Bauteil, beispielsweise einem Lenkradkranz oder einer Lenkradspeiche, zu befestigendes Bedienteil, insbesondere für ein Autoradio.

In jüngster Zeit ist man dazu übergegangen, am Lenkrad eines Kraftfahrzeugs Bedientasten anzuordnen, damit man beispielsweise ein Autoradio oder ein Fahrzeugnavigationssystem bedienen kann, ohne seine Hände weit vom Lenkrad weg bewegen zu müssen. Bei Neuwagen kann man solche Bedientasten in das Lenkrad integrieren. Wenn man ein vorhandenes Fahrzeug nachträglich mit einem entsprechenden Bedienungskomfort versehen will, dann muss man ein separates Bedienteil beispielsweise mittels Gummibändern oder Spannschellen am Lenkrad befestigen, was umständlich und wenig zuverlässig ist.

Der Erfindung liegt das Problem zugrunde, ein an einem Bauteil, insbesondere Lenkrad zu befestigendes Bedienteil so auszubilden, dass die Befestigung rasch und zuverlässig erfolgen kann, ohne dass dazu Werkzeug erforderlich ist.

Dieses Problem wird erfindungsgemäß dadurch gelöst, dass das Bedienteil zum Umschlingen des Bauteiles zwei miteinander zu verbindende Gurtteile hat und dass ein Gurtteil mit einem Spannhebel zum Verschwenken in eine Übertotpunktstellung versehen ist, in der die Gurtteile sich in einer Spannstellung befinden.

Durch solche Gurtteile und durch den Spannhebel kann man nach einem Umschlingen des Bauteils durch die Gurtteile und Verbinden der Gurtteile die erforderliche Spannkraft durch einfaches Umlegen des Spannhebels erzeugen. Deshalb lässt sich die Spannkraft zuverlässig und ohne Werkzeug erreichen. Weiterhin ist eine einfache Anpassung an unterschiedliche Durchmesser des Bauteils möglich, an welchem das Bedienteil befestigt werden soll, indem man die Gurtteile sich mehr oder minder weit überlappen lässt.

Der Spannhebel könnte ähnlich wie bei einem Spannband am freien Ende eines Gurtteils befestigt sein. Er kann mit einer Hand bedient werden, ohne dass seine Schwenkachse sich zu verlagern vermag, wenn gemäß einer vorteilhaften Weiterbildung der Erfindung der Spannhebel mit einer Schwenkachse an dem Bedienteil und ein Gurtteil an einer Achse des Spannhebels angelenkt ist, die parallel zu der Schwenkachse verläuft, und wenn der Spannhebel zum Verschwenken um seine Schwenkachse aus einer Spannstellung, in der die Achse minimalen Abstand vom Bedienteil hat, über einen Totpunkt hinaus in eine Freigabestellung schwenkbar ausgebildet ist, in der die Achse größeren Abstand von dem Bedienteil aufweist.

Die Handhabung der Befestigungsmittel des Bedienteils ist besonders einfach, wenn das eine Gurtteil eine innenseitige, zahnstangenartige Verzahnung und das andere Gurtteil eine entsprechende außenseitige, zahnstangenartige Verzahnung aufweist und nahe des Spannhebels eine Durchbrechung zum Durchstecken des anderen Gurtteils hat. Solche Spannteile haben sich bereits bei Skischuhen bewährt.

Man kann zum Schließen der Gurtteile diese stets stramm über das Bauteil legen, auf welchem das Bedienteil befestigt werden soll, und anschließend den Spannhebel umlegen, ohne dass die Gefahr einer zu hohen Spannung entsteht, wenn gemäß einer anderen Weiterbildung der Erfindung die Gurtteile elastisch ausgebildet sind.

Die Erfindung lässt verschiedene Ausführungsformen zu. Eine davon ist in der Zeichnung dargestellt und wird nachfolgend beschrieben. Diese zeigt in
- Fig. 1: ein Bedienteil mit offenen Gurtteilen zur Befestigung an einem Bauteil,
- Fig.2: das Bedienteil mit sich überlappenden Gurtteilen,
- Fig.3: das Bedienteil mit geschlossenen gespannten Gurtteilen,
- Fig.4: einen Querschnitt durch das Bedienteil mit gespannten Gurtteilen.

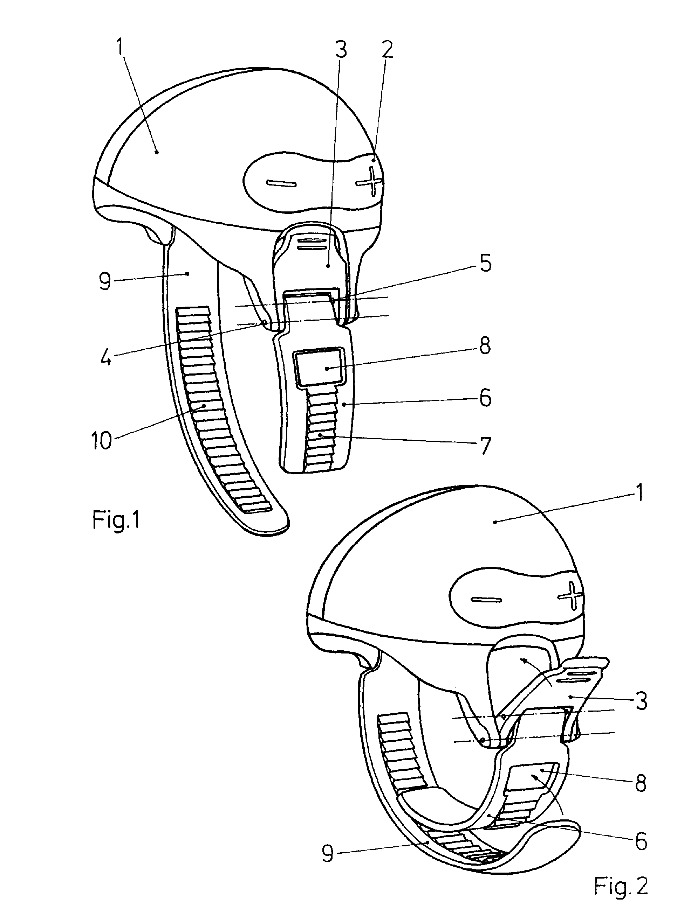

Die Figur 1 zeigt ein Bedienteil 1, welches an seiner Vorderseite einen Kippschalter 2 hat, mit dem beispielsweise ein Radio lauter oder leiser eingestellt werden kann. An der Unterseite des Bedienteils 1 ist ein Spannhebel 3 um eine Schwenkachse 4 schwenkbar angelenkt. Parallel zu dieser Schwenkachse 4 verläuft in der dargestellten Spannstellung des Spannhebels 3 eine Achse 5, an der ein Gurtteil 6 befestigt ist. Dieses Gurtteil 6 hat eine außenseitige, zahnstangenartige Verzahnung 7 und nahe seines spannhebelseitigen Endes eine Durchbrechung 8.

Ebenfalls an der Unterseite des Bedienteils 1 angelenkt ist ein zweites Gurtteil 9, welches eine der Verzahnung 7 entsprechende, innenseitige Verzahnung 10 hat.

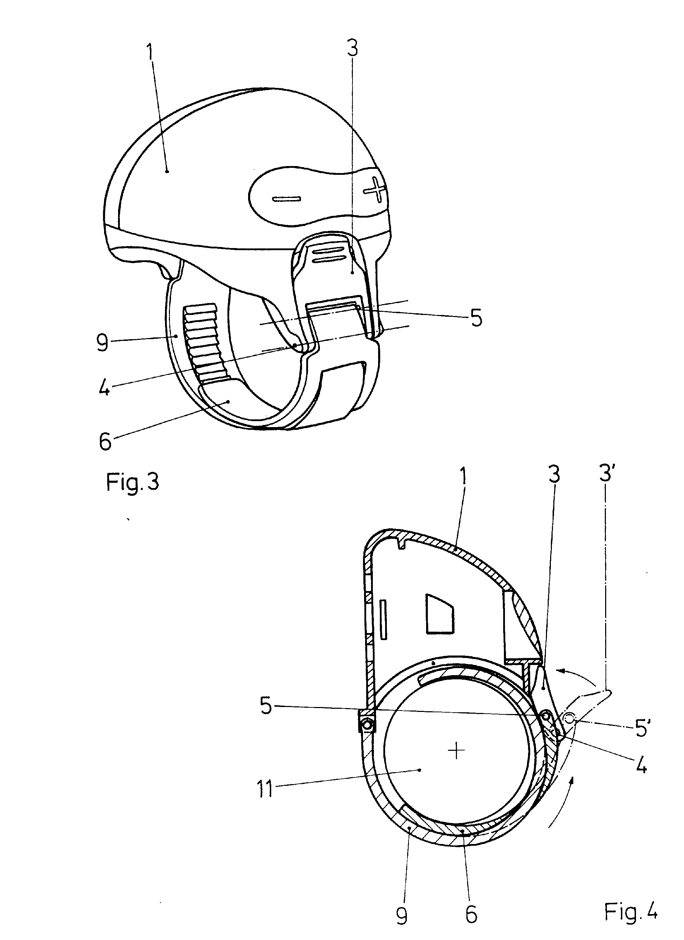

Die Figur 2 zeigt, wie man zur Befestigung des Bedienteils 1 auf einem in Figur 4 im Querschnitt gezeigten Bauteil 11 zunächst das Gurtteil 9 über das Gurtteil 6 führt. Dabei wurde der Spannhebel 3 in den Figuren gesehen nach unten geschwenkt. Anschließend steckt man das Ende des Gurtteils 9 durch die Durchbrechung 8, bis die Gurtteile 6, 9 stramm auf dem in Figur 2 nicht gezeigten Bauteil 11 aufliegen.

In der Figur 3 wird gezeigt, dass die beiden Gurtteile 6, 9 in eine Spannstellung gelangen, wenn der Spannhebel 3 zurück in die in Figur 1 gezeigte Spannstellung bewegt wird. Man erkennt, dass die Achse 5 sich dann näher zu dem Bedienteil 1 befindet als in Figur 2, so dass der Spannhub gegeben ist.

Die Figur 4 verdeutlicht, dass der Spannhebel 3 aus einer strichpunktiert dargestellten Freigabestellung mit seiner Achse 5 über einen Totpunkt hinaus in eine Spannstellung zu gelangen vermag, in der die Gurtteile 6, 9 gespannt sind.

## Patentansprüche

1. An einem im Querschnitt zumindest in etwa kreisförmigen Bauteil, beispielsweise einem Lenkradkranz oder einer Lenkradspeiche, zu befestigendes Bedienteil, insbesondere für ein Autoradio, **dadurch gekennzeichnet, dass** das Bedienteil (1) zum Umschlingen des Bauteiles (11) zwei miteinander zu verbindende Gurtteile (6, 9) hat und **dass** ein Gurtteil (6) mit einem Spannhebel (3) zum Verschwenken in eine Übertotpunktstellung versehen ist, in der die Gurtteile (6, 9) sich in einer Spannstellung befinden.

2. Bedienteil nach Anspruch 1, **dadurch gekennzeichnet, dass** der Spannhebel (3) mit einer Schwenkachse (4) an dem Bedienteil (1) und ein Gurtteil (6) an einer Achse (5) des Spannhebels (3) angelenkt ist, die parallel zu der Schwenkachse (4) verläuft, und **dass** der Spannhebel (3) zum Verschwenken um seine Schwenkachse (4) aus einer Spannstellung, in der die Achse (5) minimalen Abstand vom Bedienteil (1) hat, über einen Totpunkt hinaus in eine Freigabestellung schwenkbar ausgebildet ist, in der die Achse (5) größeren Abstand von dem Bedienteil (1) aufweist.

3. Bedienteil nach den Ansprüchen 1 oder 2, **dadurch gekennzeichnet, dass** das eine Gurtteil (9) eine innenseitige, zahnstangenartige Verzahnung (10) und das andere Gurtteil (6) eine entsprechende außenseitige, zahnstangenartige Verzahnung (7) aufweist und nahe des Spannhebels (3) eine Durchbrechung (8) zum Durchstecken des anderen Gurtteils (9) hat.

4. Bedienteil nach zumindest einem der vorangehenden Ansprüche, **dadurch gekennzeichnet, dass** die Gurtteile (6, 9) elastisch ausgebildet sind.
